# FASCICULE DE BREVET EUROPEEN

(11) **EP 3 060 414 B1**
(45) Date de publication et mention de la délivrance du brevet: **09.05.2018**
(21) Numéro de dépôt: 14786928.3
(22) Date de dépôt: 22.10.2014
(51) Int. Cl.: B60C 9/26, B60C 9/00, B29D 30/30, B60C 9/20

(54) **ARMATURE DE SOMMET DE PNEUMATIQUE POUR AVION**
FLUGZEUGRADLAUFSTREIFEN
AIRCRAFT TIRE TREAD

(30) Priorité: 23.10.2013 FR 1360306
(43) Date de publication de la demande: 31.08.2016
(73) Titulaire: Compagnie Générale des Etablissements Michelin, 63000 Clermont-Ferrand (FR)
(72) Inventeur: ROMERO DE LA OSA, Marc, F-63040 Clermont Ferrand Cedex 9 (FR)
(74) Mandataire: Millanvois, Patrick Jacques Jean
(86) Numéro de dépôt international: PCT/EP2014/072610
(87) Numéro de publication internationale: WO 2015/059172

(56) Documents cités:
- EP-A2- 1 518 666
- US-A1- 2006 000 536
- US-A1- 2012 043 000

## Description

La présente invention concerne un pneumatique pour avion, et, en particulier, l'armature de travail d'un pneumatique pour avion.

De façon générale, un pneumatique comprend une bande roulement, destinée à venir en contact avec un sol par l'intermédiaire d'une surface de roulement, la bande de roulement étant reliée par deux flancs à deux bourrelets, les deux bourrelets étant destinés à assurer une liaison mécanique du pneumatique avec une jante sur laquelle le pneumatique est monté.

Dans ce qui suit, les directions circonférentielle, axiale et radiale du pneumatique désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Un pneumatique radial pour avion, comprend plus particulièrement une armature de carcasse radiale et une armature de sommet, telles que décrites, par exemple, dans le document EP 1381525.

L'armature de carcasse radiale est la structure de renforcement du pneumatique reliant les deux bourrelets du pneumatique. L'armature de carcasse radiale d'un pneumatique pour avion comprend généralement au moins une couche de carcasse, chaque couche de carcasse étant constituée de renforts le plus souvent textiles, enrobés dans un matériau polymérique de type élastomère ou mélange élastomérique, parallèles entre eux et formant, avec la direction circonférentielle, un angle compris entre 80° et 100°.

L'armature de sommet est la structure de renforcement du pneumatique radialement intérieure à la bande de roulement et au moins en partie radialement extérieure à l'armature de carcasse radiale. L'armature de sommet d'un pneumatique pour avion comprend généralement au moins une couche de sommet, chaque couche de sommet étant constituée de renforts parallèles entre eux et enrobés dans un matériau polymérique de type élastomère ou mélange élastomérique. Parmi les couches de sommet, on distingue usuellement les couches de travail, composant l'armature de travail et constituées le plus souvent de renforts textiles, et les couches de protection, composant l'armature de protection, constituées de renforts métalliques ou textiles, et disposées radialement à l'extérieur de l'armature de travail. Les couches de travail conditionnent le comportement mécanique de l'armature de sommet. Les couches de protection protègent essentiellement les couches de travail des agressions susceptibles de se propager à travers la bande de roulement radialement vers l'intérieur du pneumatique. Une couche de sommet, et en particulier une couche de travail, est géométriquement caractérisée par sa largeur axiale, c'est-à-dire la distance entre ses extrémités axiales.

Les renforts textiles des couches de carcasse et des couches de sommet sont le plus souvent des câbles constitués de filés de filaments textiles, préférentiellement en polyamide aliphatique ou en polyamide aromatique. Les propriétés mécaniques en extension (module, allongement et force à la rupture) des renforts textiles sont mesurées après un conditionnement préalable. Par "conditionnement préalable", on entend le stockage des renforts textiles pendant au moins 24 heures, avant mesure, dans une atmosphère standard selon la norme européenne DIN EN 20139 (température de 20 ± 2°C ; hygrométrie de 65 ± 2 %). Les mesures sont réalisées de manière connue à l'aide d'une machine de traction ZWICK GmbH & Co (Allemagne) de type 1435 ou de type 1445. Les renforts textiles subissent une traction sur une longueur initiale de 400 mm à une vitesse nominale de 200 mm/min. Tous les résultats sont une moyenne de 10 mesures.

Un matériau élastomérique, tel que celui qui enrobe les renforts des couches de carcasse et des couches de sommet, peut être caractérisé mécaniquement, après cuisson, par des caractéristiques de contrainte-déformation en traction, déterminées par des essais de traction. Ces essais de traction sont effectués, sur une éprouvette, selon une méthode connue de l'homme du métier, par exemple conformément à la norme internationale ISO 37, et dans les conditions normales de température (23 + ou - 2°C) et d'hygrométrie (50 + ou -5% d'humidité relative), définies par la norme internationale ISO 471. On appelle module d'élasticité à 10% d'allongement d'un mélange élastomérique, exprimé en méga pascals (MPa), la contrainte de traction mesurée pour un allongement de 10% de l'éprouvette.

Lors de la fabrication d'un pneumatique pour avion, et plus précisément lors de l'étape de pose de l'armature de travail, une couche de travail est le plus souvent obtenue par un enroulement circonférentiel en zigzag ou par un enroulement circonférentiel en spires d'une bandelette, constituée d'au moins un renfort textile continu enrobé dans un mélange élastomérique, sur la surface latérale d'un cylindre de pose. Qu'elle soit réalisée par un enroulement circonférentiel en zigzag ou un enroulement circonférentiel en spires, la couche de travail est alors constituée par la juxtaposition d'une largeur de bandelette à chaque tour d'enroulement.

Par enroulement circonférentiel en zigzag, on entend un enroulement selon la direction circonférentielle du pneumatique et selon une courbe périodique, c'est-à-dire formée d'ondulations périodiques, oscillant entre des extrema. Enrouler une bandelette selon une courbe périodique signifie que la ligne moyenne de la bandelette enroulée, définie comme la ligne équidistante des bords de la bandelette, coïncide avec la courbe périodique. L'amplitude crête-crête, entre les extrema de la courbe périodique, conditionne ainsi la largeur axiale de la couche de travail, c'est-à-dire la distance entre ses extrémités axiales. La période de la courbe périodique est le plus souvent comprise entre 0.5 fois et 3 fois la circonférence du cylindre de pose de la bandelette. La courbe périodique est par ailleurs caractérisée par l'angle qu'elle forme dans le plan équatorial du pneumatique avec la direction circonférentielle du pneumatique, et par un rayon de courbure, au niveau des extrema de la courbe périodique. Pour un enroulement en zigzag classique, l'angle de la courbe périodique, qui correspond à l'angle formé par les renforts textiles deux à deux parallèles constitutifs de la bandelette, est généralement compris entre 5° et 35° par rapport à la direction circonférentielle. Lors d'un enroulement circonférentiel en zigzag, les couches de travail sont le plus souvent posées par paires, chaque paire de couches de travail constituant un binappe de travail. Un binappe de travail est constitué au moins en partie par deux couches de travail, c'est-à-dire en zone courante axialement intérieure aux deux extrémités axiales dudit binappe de travail. De plus un binappe de travail comprend plus de deux couches de travail radialement superposées, au niveau de ses extrémités axiales. On appelle surépaisseur d'extrémité axiale le nombre maximum de couches de travail supplémentaires, selon la direction radiale, par rapport aux deux couches de travail du binappe de travail. Cette surépaisseur d'extrémité axiale est générée par les croisements de bandelette, en extrémité de couche de travail, à chaque tour d'enroulement en zigzag. Une telle armature de travail comprenant des couches de travail obtenues par un enroulement circonférentiel en zigzag d'une bandelette a été décrite dans les documents EP 0240303, EP 0850787, EP 1163120 et EP1518666. Ce dernier document et le document US20060000536-A1 divulguent le préambule de la revendication 1.

Par enroulement circonférentiel en spires, on entend un enroulement selon la direction circonférentielle du pneumatique et selon une hélice de diamètre égal au diamètre du cylindre de pose de la bandelette et d'angle moyen compris entre 0° et 5° par rapport à la direction circonférentielle. La couche de travail ainsi obtenue par un enroulement en spires est dite circonférentielle, car l'angle des renforts textiles deux à deux parallèles de la bandelette, formé dans le plan équatorial avec la direction circonférentielle, est compris entre 0° et 5°. Le principe de l'enroulement circonférentiel en spires entraîne l'obtention d'une couche de travail unique et non d'un bi-nappe de travail comme pour l'enroulement en zig-zag.

Dans le cas d'un enroulement circonférentiel en zigzag, il est connu que les surépaisseurs d'extrémités axiales des binappes de travail, sont particulièrement sensibles à l'apparition de dommages d'endurance, telles que des fissures pouvant évoluer vers une dégradation significative de l'armature de travail et, par conséquent, à une réduction de la durée de vie du pneumatique.

Les inventeurs se sont donnés pour objectif d'améliorer l'endurance de l'armature de travail d'un pneumatique pour avion, en désensibilisant les surépaisseurs d'extrémités axiales des binappes de travail, constitutifs de l'armature de travail, aux risques de fissuration.

Cet objectif a été atteint, selon l'invention, par un pneumatique pour avion selon la revendication 1.

En d'autres termes, pour une largeur de bandelette W donnée et un angle A donné, le rayon de courbure R, au niveau des extrema de la courbe périodique de la ligne moyenne de la bandelette, ne doit pas dépasser une valeur maximale, afin de ne pas dépasser un nombre donné de couches de travail superposées au niveau des surépaisseurs d'extrémités axiales. Plus précisément, cette condition relative au rayon de courbure R permet de ne pas aller au-delà de N couches supplémentaires, au niveau des surépaisseurs d'extrémités axiales, par rapport aux deux couches du binappe de travail, en zone courante axialement intérieure aux extrémités axiales. Limiter le rayon de courbure revient à limiter le nombre de superpositions de couches aux extrémités axiales du binappe de travail. En effet plus le rayon de courbure est élevé, plus le nombre de superpositions est élevé.

Ce nombre maximal N de couches supplémentaires, au niveau des surépaisseurs d'extrémités axiales, entraîne une minimisation du nombre d'interfaces entre couches de travail, dans cette zone, et donc du risque d'apparition de fissures dans les surépaisseurs d'extrémités axiales, d'où une amélioration de l'endurance du binappe de travail et donc de l'armature de travail. Elle entraîne également une réduction de l'épaisseur des surépaisseurs d'extrémités axiales, par rapport à un binappe de travail classique, donc une baisse de la température dans cette zone, ce qui améliore également l'endurance de l'armature de travail. Enfin il en résulte une réduction de masse du binappe de travail, donc de celle du pneumatique, ce qui contribue à un gain charge utile sur l'avion qui est une préoccupation constante des constructeurs d'avion.

Les inventeurs ont mis en évidence le fait que choisir un rayon de courbure qui génère une faible surépaisseur d'extrémité du binappe de travail, donc peu de superpositions, devient de plus en plus difficile au fur et à mesure que l'angle A augmente, compte tenu des diverses contraintes géométriques résultant du principe de pose de la bandelette selon une courbe périodique. Par conséquent, le nombre minimal de superpositions en extrémité du binappe de travail augmente quand l'angle A augmente. Ainsi, pour un angle A non nul strictement inférieur à 10°, il est possible de trouver un rayon de courbure R maximum générant au plus 3 couches de travail supplémentaires en extrémité de binappe de travail. Pour un angle A au moins égal à 10° et strictement inférieur à 20°, le minimum de couches de travail supplémentaires en extrémité de binappe de travail possible est égal à 4. Pour un angle A au moins égal à 20°, le minimum de couches de travail supplémentaires en extrémité de binappe de travail possible est égal à 5.

Avantageusement, le ratio R/W entre le rayon de courbure R, au niveau des extrema de la courbe périodique de la ligne moyenne de la bandelette, et la largeur W de la bandelette est au moins égal à 10. En d'autres termes, le rayon de courbure R doit être suffisamment grand par rapport à la largeur W de bandelette. Cette valeur minimale permet d'éviter le risque de flambage de la bandelette hors de son plan au cours de la pose de la bandelette en fabrication, lors des changements de direction au niveau des extrema de la courbe périodique.

Préférentiellement, le ratio R/W entre le rayon de courbure R, au niveau des extrema de la courbe périodique de la ligne moyenne de la bandelette et la largeur W de la bandelette est au moins égal à 13. Cette valeur minimale permet de diminuer le risque de flambage de la bandelette hors de son plan au cours de la pose de la bandelette en fabrication, lors des changements de direction au niveau des extrema de la courbe périodique.

La largeur W de la bandelette est avantageusement au moins égale à 2 mm, de préférence au moins égale à 8 mm. Une valeur minimale de largeur de bandelette est nécessaire à la fois pour la faisabilité technologique de la bandelette et pour la productivité de pose de la bandelette. Par ailleurs, plus la largeur de bandelette est proche de cette valeur minimale, plus le rayon de courbure peut être réduit, ce qui permet en particulier de réduire la largeur axiale de la surépaisseur d'extrémité axiale du binappe de travail, c'est-à-dire de la zone potentiellement sensible à la fissuration.

Encore avantageusement la largeur W de la bandelette est au plus égale à 20 mm, de préférence au plus égale à 12 mm. Une valeur maximale de largeur de bandelette permet de réduire le nombre de tours de pose en zig-zag de la bandelette, nécessaire à la réalisation du binappe de travail, d'où une réduction du temps nécessaire à la réalisation du binappe de travail et donc un gain de productivité.

Il est avantageux que la bandelette comprenne des renforts constitués d'un matériau textile, de préférence d'un polyamide aliphatique. En effet, les renforts textiles, en particulier en polyamide aliphatique tel que le nylon, ont une masse relativement faible par rapport à des renforts métalliques, ce qui permet un gain significatif sur la masse du pneumatique et donc sur la charge utile de l'avion.

Alternativement, la bandelette comprend des renforts constitués d'un polyamide aromatique. Les renforts en polyamide aromatique, tel que l'aramide, permettent en effet d'obtenir un bon compromis entre la résistance mécanique et la masse.

Une autre solution est d'avoir une bandelette comprenant des renforts constitués d'une combinaison d'un polyamide aliphatique et d'un polyamide aromatique. De tels renforts sont usuellement appelés renforts hybrides et présentent les avantages techniques du nylon et de l'aramide : résistance mécanique, déformabilité en traction et masse faible.

L'invention concerne également un procédé d'obtention d'un pneumatique comprenant un binappe de travail selon l'invention.

Plus précisément, l'invention concerne également un procédé de fabrication d'un pneumatique pour avion selon l'un quelconque des modes de réalisation précédemment décrits, ce procédé comprenant une étape de fabrication d'un binappe de travail obtenu par enroulement circonférentiel en zigzag d'une bandelette de largeur W selon une courbe périodique et sur la surface latérale d'un cylindre de pose de rayon R_{f}.

Les caractéristiques et autres avantages de l'invention seront mieux compris à l'aide des figures 1 à 5, non représentées à l'échelle :
- Figure 1 : demi-vue en coupe d'un pneumatique pour avion selon l'invention, dans un plan radial (YZ) passant par l'axe de rotation du pneumatique.
- Figure 2 : vue d'ensemble d'une bandelette constitutive d'un binappe de travail d'un pneumatique selon l'invention.
- Figure 3A et 3B : vues en plan d'une extrémité axiale d'un binappe de travail d'un pneumatique selon l'invention, pour deux rayons de courbure différents.
- Figures 4A et 4B : vues en coupe d'une surépaisseur d'extrémité axiale d'un binappe de travail d'un pneumatique selon l'invention, dans un plan radial (YZ), pour deux rayons de courbure différents.
- Figure 5 : vue en perspective d'une bandelette enroulée circonférentiellement en zig-zag, selon une courbe périodique, sur la surface latérale d'un cylindre de pose.

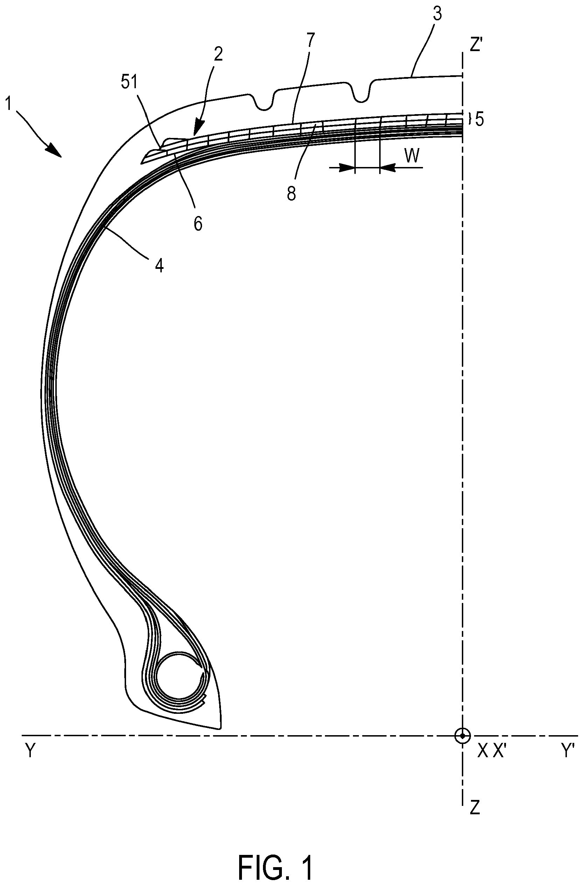

La figure 1 représente une demi-vue en coupe, dans un plan radial (YZ) passant par l'axe de rotation du pneumatique, d'un pneumatique 1 pour avion comprenant une armature de travail 2 radialement intérieure à une bande de roulement 3 et radialement extérieure à une armature de carcasse 4. L'armature de travail 2 comprend au moins un binappe de travail 5, constitué au moins en partie de deux couches de travail (6, 7) radialement superposées et comprenant, à chaque extrémité axiale, une surépaisseur d'extrémité axiale 51 comprenant plus de deux couches de travail (6,7) radialement superposées. Chaque couche de travail (6, 7) est constituée par une juxtaposition axiale de bandelettes 8 de largeur W.

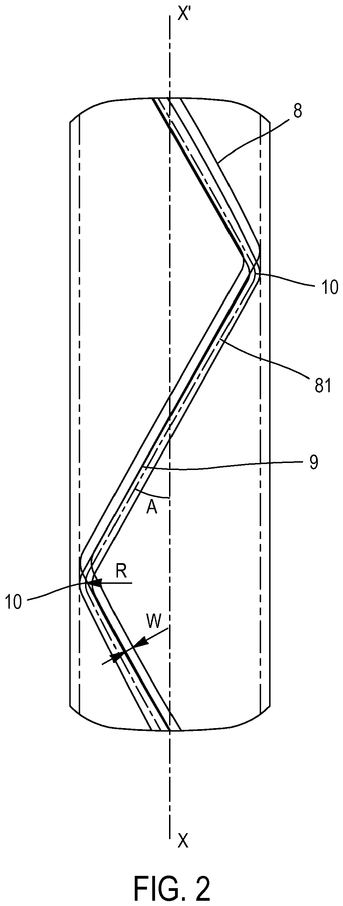

La figure 2 représente une vue d'ensemble d'une bandelette 8 constitutive d'un binappe de travail d'un pneumatique selon l'invention. La bandelette 8 de largeur W a une ligne moyenne 81, s'étendant circonférentiellement, c'est-à-dire selon la direction (XX') selon une courbe périodique 9 comprenant des extrema 10. En d'autres termes, la courbe périodique 9 est la courbe support de la ligne moyenne 81 de la bandelette 8. La courbe périodique 9 forme, dans le plan équatorial (XZ) et avec la direction circonférentielle (XX'), un angle A non nul. La courbe périodique 9 oscille entre des extrema 10, au niveau desquels on définit le rayon de courbure R.

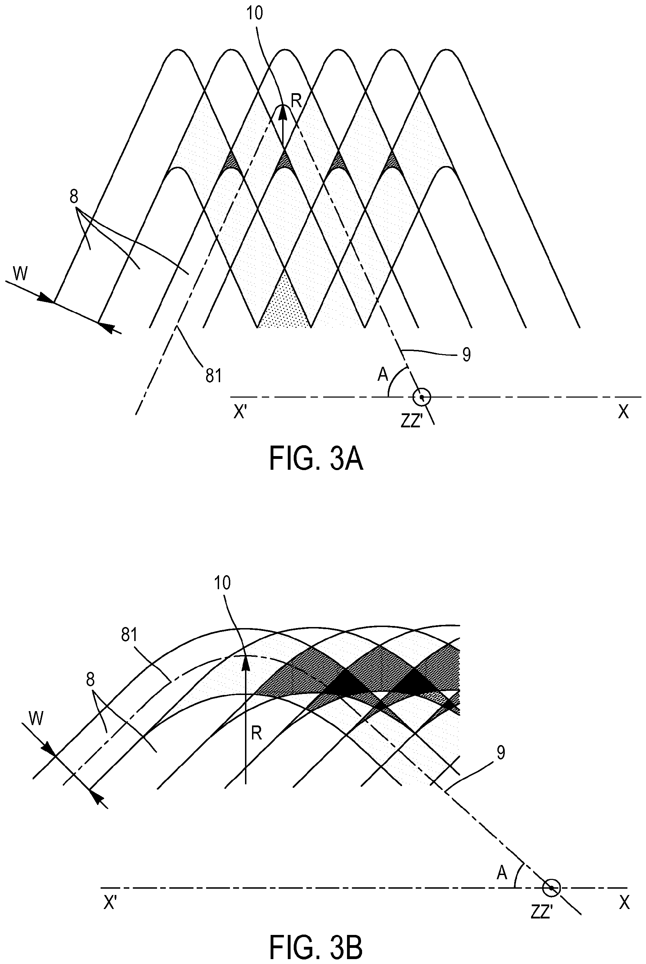

Les figures 3A et 3B représentent respectivement des vues en plan d'une extrémité axiale d'un binappe de travail d'un pneumatique selon l'invention, pour deux rayons de courbure différents. Chacune de ces figures représente la juxtaposition axiale d'une bandelette 8 de largeur W, de ligne moyenne 81 suivant la courbe périodique 9 ayant des extrema 10 au niveau desquels elle présente un rayon de courbure R. En outre la ligne moyenne 81 forme un angle non nul A, dans le plan équatorial (XZ) et avec la direction circonférentielle (XX'). La figure 3A correspond à un ratio R/W entre le rayon de courbure R, au niveau des extrema 10 de la courbe périodique 9 de la ligne moyenne 81 de la bandelette 8, et la largeur W de la bandelette 8, égal à 27. La zone blanche correspond à une épaisseur de de bandelette, la zone gris clair correspond à deux épaisseurs de bandelette et la zone gris foncé correspond à trois épaisseurs de bandelette. La figure 3B correspond à un ratio R/W entre le rayon de courbure R, au niveau des extrema 10 de la courbe périodique 9 de la ligne moyenne 81 de la bandelette 8, et la largeur W de la bandelette 8, égal à 127. Dans ce cas, le nombre de superpositions maximal, correspondant à la zone la plus foncée, correspond à quatre épaisseurs de bandelette.

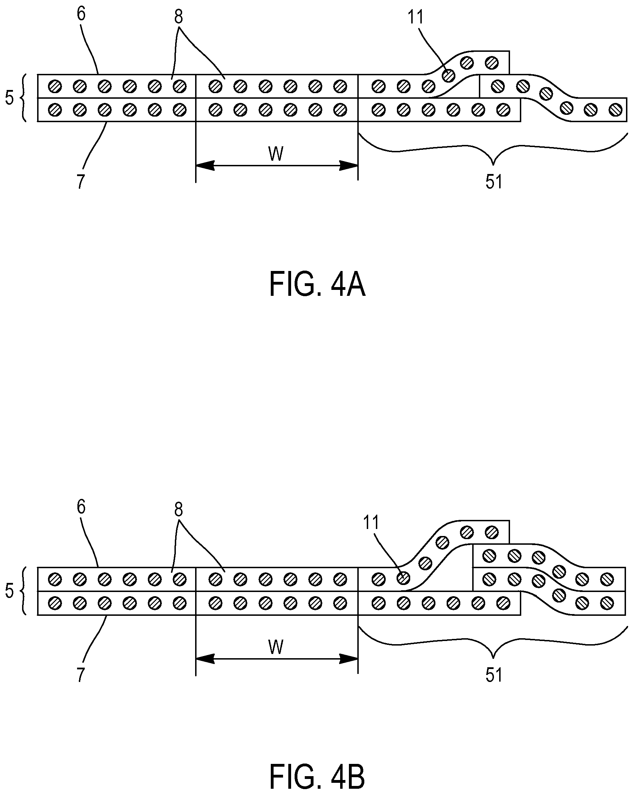

Les figures 4A et 4B sont des vues en coupe d'une surépaisseur d'extrémité axiale 51 d'un binappe de travail 5 d'un pneumatique selon l'invention, dans un plan radial (YZ), pour deux rayons de courbure différents. Chacune de ces figures présente un binappe de travail 5, constituée par la superposition radiale de deux couches de travail (6,7), chaque couche de travail (6,7) étant constituée par une juxtaposition axiale de bandelettes 8 de largeur W, en zone courante, c'est-à-dire axialement intérieure aux surépaisseurs d'extrémité axiale 51 du binappe de travail 5. Dans la figure 4A, la surépaisseur d'extrémité axiale 51 comprend 3 couches de travail au moins en partie superposées, correspondant à un ratio R/W au plus égal à 1/(1-cosA) + 1/2, pour un angle A non nul strictement inférieur à 10. Dans la figure 4B, la surépaisseur d'extrémité axiale 51 comprend 4 couches de travail au moins en partie superposées, correspondant à un ratio R/W au plus égal à 2/(1-cosA) + 1/2, pour un angle A au moins égal à 10° et strictement inférieur à 20°.

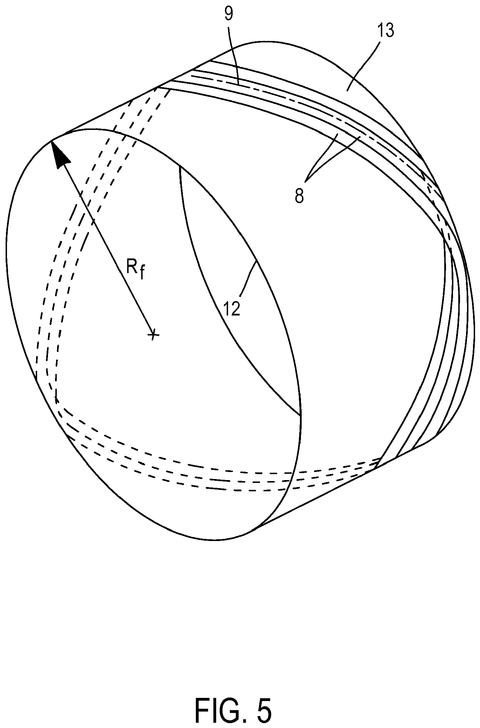

La figure 5 est une vue en perspective d'une bandelette 8 enroulée circonférentiellement en zig-zag, selon une courbe périodique 9, sur la surface latérale 13 d'un cylindre de pose 12 de rayon R_{f}. Elle illustre un procédé de fabrication d'un pneumatique pour avion selon l'invention.

Les inventeurs ont réalisé l'invention pour un pneumatique pour avion de dimension 1400X530 R 23.

Dans le pneumatique étudié, la bandelette constitutive du binappe de travail a une largeur W égale à 11 mm et a une ligne moyenne, formant un angle de 10° avec la direction circonférentielle du pneumatique. Le rayon de courbure R de ladite ligne moyenne est pris égal à 180 mm, ce qui conduit à un ratio R/W égal à 16, très inférieur à la valeur maximale recommandée égale 2/(1-cosA) + 1/2, soit 132. En effet, sur un plan pratique, le rayon de courbure est choisi pour être très inférieur à la valeur maximale recommandée, tout en se rapprochant le plus possible de la valeur minimale recommandée égale à 10, de préférence égale à 13, en se plaçant à la limite du risque de flambage de la bandelette lors de son enroulement en zig-zag. Ainsi la valeur choisie de ratio R/W égale à 16 satisfait bien les deux conditions : être supérieure à 13 et inférieure à 132. Dans le cas présent, une superposition maximale de 3 couches de travail est obtenue en extrémité de binappe de travail. Le gain en endurance d'un pneumatique comprenant un binappe de travail selon l'invention, par rapport à un pneumatique de référence comprenant un binappe de travail sans minimisation de la surépaisseur d'extrémité axiale dont le rayon de courbure minimal est égal à 176 mm, conduit à un gain en endurance estimé à 10%. Cette endurance est mesurée par le nombre de dommages constatés sur un pneumatique ayant été soumis à un test reglémentaire TSO, tel que défini par la European Aviation European Safety Agency (EASA).

## Revendications

1. Pneumatique (1) pour avion comprenant:
- une armature de travail (2) radialement intérieure à une bande de roulement (3) et radialement extérieure à une armature de carcasse (4),
- l'armature de travail (2) comprenant au moins un binappe de travail (5), constitué au moins en partie de deux couches de travail (6, 7) radialement superposées et comprenant, à chaque extrémité axiale, une surépaisseur d'extrémité axiale (51) comprenant plus de deux couches de travail (6,7) radialement superposées,
- chaque couche de travail (6, 7) étant constituée par une juxtaposition axiale de bandelettes (8) de largeur W,
- chaque bandelette (8) ayant une ligne moyenne (81) s'étendant circonférentiellement selon une courbe périodique (9) comprenant des extrema (10),
- la courbe périodique (9) formant, dans le plan équatorial (XZ) et avec la direction circonférentielle (XX'), un angle A au moins égal à 5° et au plus égal à 35°, et ayant un rayon de courbure R au niveau de ses extrema (10),
**caractérisé en ce que,** lorsque l'angle A est strictement inférieur à 10°, le ratio R/W entre le rayon de courbure R, au niveau des extrema (10) de la ligne moyenne (81) de la courbe périodique (9) de la bandelette (8), et la largeur W de la bandelette (8) est au plus égal à 1/(1-cosA) + 1/2, de telle sorte que chaque surépaisseur d'extrémité axiale (51) du binappe de travail (5) comprend au plus 3 couches de travail, **en ce que,** lorsque l'angle A est au moins égal à 10° et strictement inférieur à 20°, le ratio R/W est au plus égal à 2/(1-cosA) + 1/2, de telle sorte que chaque surépaisseur d'extrémité axiale (51) du binappe de travail (5) comprend au plus 4 couches de travail **et en ce que,** lorsque l'angle A est au moins égal à 20°, le ratio R/W est au plus égal à 3/(1-cosA) + 1/2, de telle sorte que chaque surépaisseur d'extrémité (51) du binappe de travail (5) comprend au plus 5 couches de travail.

2. Pneumatique (1) pour avion selon la revendication 1, **dans lequel** le ratio R/W entre le rayon de courbure R, au niveau des extrema (10) de la courbe périodique (9) de la ligne moyenne (81) de la bandelette (8), et la largeur W de la bandelette (8) est au moins égal à 10.

3. Pneumatique (1) pour avion selon l'une quelconque des revendications 1 ou 2, **dans lequel** le ratio R/W entre le rayon de courbure R, au niveau des extrema (10) de la courbe périodique (9) de la ligne moyenne (81) de la bandelette (8), et la largeur W de la bandelette (8) est au moins égal à 13.

4. Pneumatique (1) pour avion selon l'une quelconque des revendications 1 à 3, **dans lequel** la largeur W de la bandelette (8) est au moins égale à 2 mm, de préférence au moins égale à 8 mm.

5. Pneumatique (1) pour avion selon l'une quelconque des revendications 1 à 4, **dans lequel** la largeur W de la bandelette (8) est au plus égale à 20 mm, de préférence au plus égale à 12 mm.

6. Pneumatique (1) pour avion selon l'une quelconque des revendications 1 à 5, **dans lequel** la bandelette (8) comprend des renforts (11) constitués d'un matériau textile, de préférence d'un polyamide aliphatique.

7. Pneumatique (1) pour avion selon l'une quelconque des revendications 1 à 6, **dans lequel** la bandelette (8) comprend des renforts (11) constitués d'un polyamide aromatique.

8. Pneumatique (1) pour avion selon l'une quelconque des revendications 1 à 6, **dans lequel** la bandelette (8) comprend des renforts (11) constitués d'une combinaison d'un polyamide aliphatique et d'un polyamide aromatique.

9. Procédé de fabrication d'un pneumatique (1) pour avion selon l'une quelconque des revendications 1 à 8, comprenant une étape de fabrication d'un binappe de travail dans laquelle le binappe de travail (5) est obtenu par enroulement circonférentiel en zigzag d'une bandelette (8) de largeur W selon une courbe périodique (9) et sur la surface latérale (13) d'un cylindre de pose (12) de rayon R_{f}.

## Patentansprüche

1. Flugzeugreifen (1), umfassend:
- eine Arbeitsarmierung (2) radial innerhalb eines Laufstreifens (3) und radial außerhalb einer Karkassenarmierung (4),
- wobei die Arbeitsarmierung (2) mindestens eine Arbeits-Doppellage (5) umfasst, die zumindest teilweise aus zwei radial übereinanderliegenden Arbeitsschichten (6, 7) gebildet ist und an jedem axialen Ende eine axiale Endverdickung (51) umfasst, die mehr als zwei radial übereinanderliegende Arbeitsschichten (6, 7) umfasst,
- wobei jede Arbeitsschicht (6, 7) durch eine axiale Nebeneinanderanordnung von Bändchen (8) einer Breite W gebildet ist,
- wobei jedes Bändchen (8) eine Mittellinie (81) aufweist, die sich in Umfangsrichtung entlang einer periodischen Kurve (9) erstreckt, die Extrema (10) aufweist,
- wobei die periodische Kurve (9) in der Äquatorialebene (XZ) und mit der Umfangsrichtung (XX') einen Winkel A bildet, der mindestens gleich 5° und höchstens gleich 35° ist, und an ihren Extrema (10) einen Krümmungsradius R aufweist,
**dadurch gekennzeichnet, dass**, wenn der Winkel A streng kleiner 10° ist, das Verhältnis R/W zwischen dem Krümmungsradius R an den Extrema (10) der Mittellinie (81) der periodischen Kurve (9) des Bändchens (8) und der Breite W des Bändchens (8) höchstens gleich 1/(1-cosA) + 1/2 ist, so dass jede axiale Endverdickung (51) der Arbeits-Doppellage (5) höchstens 3 Arbeitsschichten umfasst, dadurch, dass, wenn der Winkel A mindestens gleich 10° und streng kleiner 20° ist, das Verhältnis R/W höchstens gleich 2/(1-cosA) + 1/2 ist, so dass jede axiale Endverdickung (51) der Arbeits-Doppellage (5) höchstens 4 Arbeitsschichten umfasst, und dadurch, dass, wenn der Winkel A mindestens gleich 20° ist, das Verhältnis R/W höchstens gleich 3/(1-cosA) + 1/2 ist, so dass jede Endverdickung (51) der Arbeits-Doppellage (5) höchstens 5 Arbeitsschichten umfasst.

2. Flugzeugreifen (1) nach Anspruch 1, wobei das Verhältnis R/W zwischen dem Krümmungsradius R an den Extrema (10) der periodischen Kurve (9) der Mittellinie (81) des Bändchens (8) und der Breite W des Bändchens (8) mindestens gleich 10 ist.

3. Flugzeugreifen (1) nach einem der Ansprüche 1 oder 2, wobei das Verhältnis R/W zwischen dem Krümmungsradius R an den Extrema (10) der periodischen Kurve (9) der Mittellinie (81) des Bändchens (8) und der Breite W des Bändchens (8) mindestens gleich 13 ist.

4. Flugzeugreifen (1) nach einem der Ansprüche 1 bis 3, wobei die Breite W des Bändchens (8) mindestens gleich 2 mm, vorzugsweise mindestens gleich 8 mm ist.

5. Flugzeugreifen (1) nach einem der Ansprüche 1 bis 4, wobei die Breite W des Bändchens (8) höchstens gleich 20 mm, vorzugsweise höchstens gleich 12 mm ist.

6. Flugzeugreifen (1) nach einem der Ansprüche 1 bis 5, wobei das Bändchen (8) Verstärkungen (11) umfasst, die aus einem Textilmaterial, vorzugsweise aus einem aliphatischen Polyamid, gebildet sind.

7. Flugzeugreifen (1) nach einem der Ansprüche 1 bis 6, wobei das Bändchen (8) Verstärkungen (11) umfasst, die aus einem aromatischen Polyamid gebildet sind.

8. Flugzeugreifen (1) nach einem der Ansprüche 1 bis 6, wobei das Bändchen (8) Verstärkungen (11) umfasst, die aus einer Kombination eines aliphatischen Polyamids und eines aromatischen Polyamids gebildet sind.

9. Verfahren zur Herstellung eines Flugzeugreifens (1) nach einem der Ansprüche 1 bis 8, umfassend einen Schritt der Herstellung einer Arbeits-Doppellage, wobei die Arbeits-Doppellage (5) durch zickzackförmiges Wickeln eines Bändchens (8) einer Breite W in Umfangsrichtung gemäß einer periodischen Kurve (9) und auf die Seitenfläche (13) eines Auflagezylinders (12) mit einem Radius R_{f} erhalten wird.

## Claims

1. Aircraft tyre (1) comprising:
- a working reinforcement (2) radially on the inside of a tread (3) and radially on the outside of a carcass reinforcement (4),
- the working reinforcement (2) comprising at least one working bi-ply (5) made up at least in part of two working layers (6, 7) which are radially superposed and comprising, at each axial end, an axial-end additional thickness (51) comprising more than two radially superposed working layers (6, 7),
- each working layer (6, 7) being made up of an axial juxtaposition of strips (8) of width W,
- each strip (8) having a mid-line (81) extending circumferentially along a periodic curve (9) comprising extrema (10),
- the periodic curve (9) forming, in the equatorial plane (XZ) and with the circumferential direction (XX'), an angle A at least equal to 5° and at least equal to 35°, and having a radius of curvature R at its extrema (10),
**characterized in that,** when the angle A is strictly less than 10, the ratio R/W between the radius of curvature R, at the extrema (10) of the mid-line (81) of the periodic curve (9) of the strip (8), and the width W of the strip (8) is at most equal to 1/(1-cosA) + ½, such that each axial-end additional thickness (51) of the working bi-ply (5) comprises at most 3 working layers, **in that,** when the angle A is at least equal to 10° and strictly less than 20°, the ratio R/W is at most equal to 2/(1-cosA) + ½, such that each axial-end additional thickness (51) of the working bi-ply (5) comprises at most 4 working layers and **in that,** when the angle A is at least equal to 20°, the ratio R/W is at most equal to 3/(1-cosA) + ½, such that each end additional thickness (51) of the working bi-ply (5) comprises at most 5 working layers.

2. Aircraft tyre (1) according to Claim 1, **in which** the ratio R/W between the radius of curvature R, at the extrema (10) of the periodic curve (9) of the mid-line (81) of the strip (8), and the width W of the strip (8) is at least equal to 10.

3. Aircraft tyre (1) according to either one of Claims 1 and 2, **in which** the ratio R/W between the radius of curvature R, at the extrema (10) of the periodic curve (9) of the mid-line (81) of the strip (8), and the width W of the strip (8) is at least equal to 13.

4. Aircraft tyre (1) according to any one of Claims 1 to 3, **in which** the width W of the strip (8) is at least equal to 2 mm, preferably at least equal to 8 mm.

5. Aircraft tyre (1) according to any one of Claims 1 to 4, **in which** the width W of the strip (8) is at most equal to 20 mm, preferably at most equal to 12 mm.

6. Aircraft tyre (1) according to any one of Claims 1 to 5, **in which** the strip (8) comprises reinforcers (11) made of a textile material, preferably of an aliphatic polyamide.

7. Aircraft tyre (1) according to any one of Claims 1 to 6, **in which** the strip (8) comprises reinforcers (11) made of an aromatic polyamide.

8. Aircraft tyre (1) according to any one of Claims 1 to 6, **in which** the strip (8) comprises reinforcers (11) made of a combination of an aliphatic polyamide and of an aromatic polyamide.

9. Method of manufacturing an aircraft tyre (1) according to any one of Claims 1 to 8, comprising a step of manufacturing a working bi-ply, in which the working bi-ply (5) is obtained by circumferential zigzag winding of a strip (8) of width W with a periodic curve (9) and on to the lateral surface (13) of a building drum (12) of radius R_{f}.
